Europäisches Patentamt

(19) European Patent Office

Office européen des brevets

(11) Publication number: **0 260 809
B1**

# EUROPEAN PATENT SPECIFICATION

(45) Date of publication of the patent specification:
07.11.90

(21) Application number: 87307202.9

(22) Date of filing: 14.08.87

(51) Int. Cl.⁵: **B60S 1/38**

(54) **Device for connecting a wiping element to the superstructure of a wiper blade.**

(30) Priority: 19.08.86 FR 8611834

(43) Date of publication of application:
23.03.88 Bulletin 88/12

(45) Publication of the grant of the patent:
07.11.90 Bulletin 90/45

(84) Designated Contracting States:
BE DE ES GB IT

(56) References cited:
BE-A- 674 257
US-A- 3 041 653
US-A- 3 386 123
US-A- 3 696 497

(73) Proprietor: **CHAMPION SPARK PLUG EUROPE S.A.,
Avenue Leopold III 2a, B-7120 Binche(BE)**

(72) Inventor: **Beneteau, Christian, Rue du 131e Regiment
d'Infanterie 61, F-54730 Gorcy(FR)**
Inventor: **Guerard, Norbert, Rue du Canada 14,
B-6760 Virton(BE)**

(74) Representative: **Crawford, Andrew Birkby et al, A.A.
THORNTON & CO. Northumberland House 303-306 High
Holborn, London WC1V 7LE(GB)**

## Description

The present invention relates to a device for securing a wiping element to the superstructure of a wiper blade wherein the wiping element is reinforced by two backing strips respectively located in two longitudinally extending recesses provided in the wiping element and wherein the superstructure is provided with at least two claws which partially surround the two backing strips and the upper portion of the wiping element.

In prior art devices of the thus defined type are for example disclosed in French Patent Application FR-A 2 502 086 and in U.S. Patent US-A 2 924 839. In the French patent application means are provided for retaining the backing strips on the wiping element and the assembly wiping element/backing strips is locked with respect to one of the claws of the superstructure of the wiper blade by means of two lips cut in each backing strip respectively on each side of said claw and bent outwardly with respect to the longitudinal axis of the wiping element. A similar system is disclosed in the U.S. patent, the only difference being that the two lips are not bent outwardly, but either upwardly or downwardly with respect to the longitudinal axis of the wiping element.

A further example is provided by U.S. Patent US-A 3 386 123 wherein means are provided for retaining the backing strips on the wiping element. The backing strips are locked with respect to at least one claw by means of cut-outs in the backing strips into which the claws fit.

The object of the invention is to provide a device which is similar to those disclosed in the above mentioned documents, but which is simpler, easier to manufacture and therefore less expensive.

The device according to the invention provides a wiper blade comprising a wiping element, two backing strips and a superstructure wherein the wiping element is reinforced by the two backing strips respectively located in two longitudinally extending recesses provided in the wiping element, wherein the superstructure is provided with at least two claws which partially surround the two backing strips and the upper portion of the wiping element, wherein first means are provided on the exterior longitudinal edge of each backing strip for maintaining at least one of said claws in a predetermined position on said backing strips and wherein second means are provided on the interior longitudinal edge of each backing strip for maintaining said backing strips in a predetermined position on the wiping element wiper blade of the type known from US-A 3 386 123, characterized in that said first and second means are aligned with each other transverse to the longitudinal axis of the two backing strips, that they are located inside one of the claws of the superstructure of the wiper blade and that they consist of flattened areas projecting from the edges of the backing strips in the plane of said strips.

As will be explained in the following portions of the description the invention permits the assembly wiping element/backing strips to be retained on the superstructure of the wiper blade and prevents any longitudinal displacement of the backing strips with respect to the wiping element.

Other features of the device according to the invention will be better understood when reading the following portions of the description in conjunction with the appended drawings, wherein:

Fig. 1 is a partial elevational view of wiper blade and of the device of the invention according to one embodiment,

Fig. 2 is a sectional view, along line II–II, of the device of Fig. 1, and

Fig. 3 is a partial sectional view, at a larger scale and along III–III, of the device of Fig. 1.

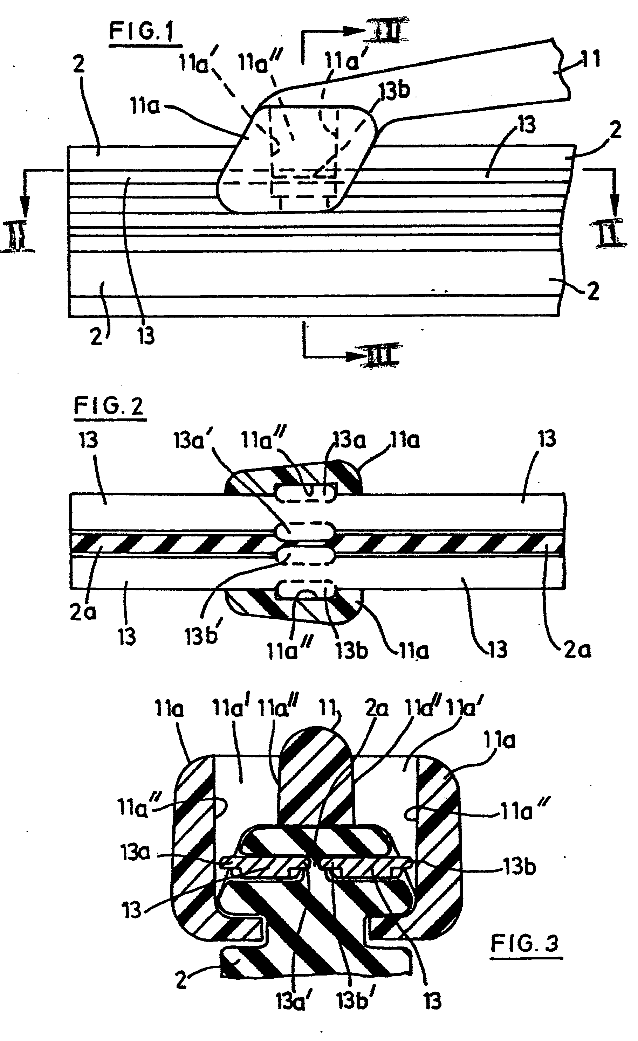

On Figs 1, 2 and 3 the following elements are represented: a portion of the superstructure 11 of the wiper blade, the claw 11a which is part of said superstructure 11, the wiping element 2, the two backing strips 13, and the flattened areas 13a, 13a', 13b, 13b' of the two backing strips 13 and the portion 2a (Fig. 2) of the wiping element 2, said portion 2a being located between the two backing strips 13.

Said figures show moreover that the claw 11a is provided with two substantially vertical openings which are defined by the transverse planes 11a' and by the longitudinal planes 11a''. Each of said two openings is substantially located above the exterior longitudinal edge of one of the two backing strips 13.

Each backing strip 13 is provided with one single flattened area 13a, 13b which projects laterally from its exterior longitudinal edge and said flattened areas 13a, 13b are located inside the claw 11a of the superstructure 11 of the wiper blade.

The dimensions of said flattened areas 13a, 13b are adapted to the horizontal dimensions of the two openings provided in the claw 11a and defined by transverse and longitudinal planes 11a', 11a''. In other words, the length (in the longitudinal direction of the wiper blade) of said openings is slightly superior to the corresponding length of the flattened areas 13a, 13b. The transverse edges of the flattened areas 13a, 13b thus practically touch said transverse planes 11a', of the openings provided in the claw 11a (Fig. 2) and the backing strips 13 thus cannot move longitudinally with respect to the claw 11a and consequently with respect to the superstructure 11 of the wiper blade.

The wiping element 2 is longitudinally locked with respect to the two backing strips 13 by means of the flattened areas 13a', 13b' provided on the respective interior longitudinal edges of the backing strips 13 and projecting from said interior edges.

The claw 11a and the superstructure 11, or the element of the superstructure of which the claw 11a is an integral part, may be made of an appropriate plastic material.

The above described wiper blades each comprise two backing strips 13 which are independent one from the other, i.e. they are not linked together. It is however evident that the invention also applies to wiper blades which comprise two backing strips which are linked together at one or at several points.

## Claims

1. A wiper blade comprising a wiping element (2), two backing strips (13) and a superstructure (11) wherein the wiping element (2) is reinforced by the two backing strips (13) respectively located in two longitudinally extending recesses provided in the wiping element (2), wherein the superstructure (11) is provided with at least two claws (11a) which partially surround the two backing strips (13) and the upper portion of the wiping element (2), wherein first means (13a, 13b) are provided on the exterior longitudinal edge of each backing strip (13) for maintaining at least one of said claws (11a) in a predetermined position on said backing strips (13) and wherein second means (13a′, 13b′) are provided on the interior longitudinal edge of each backing strip (13) for maintaining said backing strips (13) in a predetermined position on the wiping element (2), characterized in that said first and second means are aligned with each other transverse to the longitudinal axis of the two backing strips (13), that they are located inside one of the claws (11a) of the superstructure (11) of the wiper blade and that they consist of flattened areas (13a, 13b; 13a, 13b) projecting from the edges of the backing strips (13) in the plane of said strips (13).

2. A wiper blade according to claim 1, wherein the two backing strips (13) are linked together at at least one point.

## Patentansprüche

1. Wischerblatt, das ein Wischelement (2), zwei Versteifungsstreifen (13) und eine Halteanordnung (11) aufweist, bei dem das Wischelement (2) durch zwei Versteifungsstreifen (13) versteift ist, die jeweils in zwei in Längsrichtung verlaufenden Ausnehmungen vorgesehen sind, die in dem Wischelement (2) vorgesehen sind, bei dem die Halteanordnung (11) mit wenigstens zwei Klauen (11a) versehen ist, die teilweise die beiden Versteifungsstreifen (13) und den oberen Teil des Wischelements (2) umgeben, bei dem erste Einrichtungen (13a, 13b) auf dem äußeren Längsrand jedes Versteifungsstreifens (13) vorgesehen sind, welche wenigstens eine der Klauen (11a) in einer vorbestimmten Lage auf dem Versteifungsstreifen (13) hält, und bei dem zweite Einrichtungen (13a′, 13b′) auf dem inneren Längsrand jedes Versteifungsstreifens (13) vorgesehen sind, welche die Versteifungsstreifen (13) in einer vorbestimmten Lage auf dem Wischelement (2) halten, dadurch gekennzeichnet, daß die ersten und zweiten Einrichtungen quer zur Längsachse der beiden Versteifungsstreifen (13) zueinander ausgerichtet sind, daß sie von einer der Klauen (11a) der Halteanordnung (11) des Wischerblatts nach innen liegen, und daß sie abgeflachte Bereiche (13a, 13b; 13a, 13b) aufweisen, die von den Rändern der Versteifungsstreifen (13) in der Ebene der Streifen (13) vorstehen.

2. Wischerblatt nach Anspruch 1, bei dem die beiden Versteifungsstreifen (13) an wenigstens einer Stelle miteinander verbunden sind.

## Revendications

1. Lame d'essuie-glace comprenant un élément de balayage (2), deux bandes d'appui (13) et une superstructure (11), dans laquelle l'élément de balayage (2) est renforcé par deux bandes d'appui (13) situées respectivement dans deux évidements s'étandant longitudinalement, prévus dans l'élément de balayage (2), dans laquelle la superstructure (11) est pourvue d'au moins deux mâchoires (11a) qui entourent partiellement les deux bandes d'appui (13) et la partie supérieure de l'élément de balayage (2), où de premiers moyens (13a, 13b) sont prévus sur le bord longitudinal extérieur de chaque bande d'appui (13) pour maintenir au moins l'une des mâchoires (11a) dans une position prédéterminée sur lesdites bandes d'appui (13) et où de seconds moyens (13a′, 13b′) sont prévus sur le bord longitudinal intérieur de chaque bande d'appui (13) pour maintenir lesdites bandes d'appui (13) dans une position prédéterminée sur l'élément de balayage (2), caractérisée en ce que lesdits premiers et seconds moyens sont alignés l'un avec l'autre transversalement à l'axe longitudinal des deux bandes d'appui (13), en ce qu'ils sont situés à l'intérieur de l'une des mâchoires (11a) de la superstructure (11) de la lame d'essui-glasse et en ce qu'ils consistent en régions aplaties (13a, 13b; 13a′, 13b′) s'avançant depuis les bords des bandes d'appui (13) dans le plan desdites bandes (13).

2. Lame d'essuie-glasse suivant la revendication 1, dans laquelle les deux bandes d'appui (13) sont reliées ensemble en au moins un plan.

EP 0 260 809 B1

FIG.1

FIG.2

FIG.3